# EUROPEAN PATENT SPECIFICATION

(11) **EP 3 883 681 B1**
(45) Date of publication and mention of the grant of the patent: **29.10.2025**
(21) Application number: 19809584.6
(22) Date of filing: 19.11.2019
(51) Int. Cl.: B01J 2/12

(54) **BALLING MACHINE AND SCRAPER FOR A BALLING MACHINE**
BALLUNGSMASCHINE UND ABSTREIFER FÜR EINE BALLUNGSMASCHINE
MACHINE DE BOULETAGE ET RACLEUR POUR UNE MACHINE DE BOULETAGE

(30) Priority: 20.11.2018 GB 201818903
(43) Date of publication of application: 29.09.2021
(73) Proprietor: South Wales Minerals & Mining Ltd, Cardiff CF23 8AA (GB)
(72) Inventor: MCCORMACK, Craig, Glamorgan CF35 6HL (GB); LLOYD, Owain, Glamorgan CF35 6HL (GB)
(74) Representative: Abel & Imray LLP
(86) International application number: PCT/GB2019/053264
(87) International publication number: WO 2020/104780

(56) References cited:
- WO-A1-2017/125751
- GB-A- 1 233 891
- US-A- 4 087 334
- US-A- 4 212 615

## Description

### Field of the Invention

The present invention concerns a balling machine. More particularly this invention concerns a balling machine having a scraper for controlling the build-up of material in the balling machine. The invention also concerns a scraper for a balling machine and a method of balling material.

### Background of the Invention

International patent application WO 2017/125751 A1 discloses a balling machine for use in the manufacture of aggregate. The balling machine comprises an elongate rotatable tube. Material is fed into the rotatable tube and the rotation of the rotatable tube lifts the material up the sides. When the material eventually falls back down the material rolls and tumbles. This motion causes the material to agglomerate and eventually form balls of the material. As the balling machine is used, a certain amount of the material may build-up on the internal surface of the rotatable tube. A scraper is provided to control how much material can build-up.

WO 2017/125751 A1 describes that the scraper may be arranged to allow the material to form into circumferential ridges (rings) on the internal surface of the rotatable tube. The circumferential ridges of material may increase the contact area and friction between the material being balled and the internal surface of the tube. This can help lift the material higher up the sides of the tube and encourage the material to roll down the side rather than sliding down in one mass. This may result in a generally more efficient balling process as the material more readily forms into balls of a satisfactory size.

The present invention seeks to provide improvements to the balling machine of WO 2017/125751 A1 and to balling machines more generally.

US 4212615 (A) discloses an agglomerating apparatus in the form of a rotating drum. Control of the agglomerate size distribution discharged from the drum is achieved by increasing the relative residence time of the small or growing agglomerates and by limiting contact between the large formed agglomerates and the small forming or growing agglomerates.

### Summary of the Invention

The present invention provides, according to a first aspect, a balling machine comprising:
a rotatable tube arranged to receive a material therein and to rotate so as to cause the material to form balls; and
a scraper arranged to control the build-up of the material on the inside surface of the rotatable tube;
wherein the scraper comprises a scraping edge comprising a plurality of teeth and a plurality of recesses between the teeth, wherein the arrangement of the teeth and the recesses permit the material to build-up into a plurality of circumferential ridges on the inside surface of the rotatable tube; and
wherein a first and a second of the recesses have different depths so as to permit at least two of the circumferential ridges to build-up to different maximum heights

Allowing the circumferential ridges of material to build-up to different maximum heights can help control the progress of the balls through the rotatable tube. In particular, one or more higher circumferential ridges can be allowed to form at certain positions along the rotatable tube. The balls of material may back-up behind these higher circumferential ridges before eventually spilling over the top and continuing down the rotatable tube. These higher circumferential ridges thus effectively act as baffles in the rotatable tube.

Having the balls of material back-up behind the higher circumferential ridges may result in the material being resident in the rotatable tube for a longer period of time (as compared to a situation where the higher circumferential ridges are not present). This may generally help form larger, rounder and/or more compact balls of material which may result in a better quality product.

It has also been found that having one or more of the higher circumferential ridges may help form balls of a more uniform size. This may be because, of the balls that have backed up behind the higher circumferential ridges, the larger balls tend to rise to the top of the material that has collected behind the circumferential ridge. The larger balls therefore tend to spill over the higher circumferential ridges first. The smaller balls tend to stay behind these higher circumferential ridges where they agglomerate and grow before themselves spilling over and continuing down the rotatable tube. This can result in fewer smaller balls of the material reaching the end of the balling machine and appearing in the final product. The smaller balls are also compacted by the weight of the balls above them generally helping to improve their structural integrity.

The higher circumferential ridges can also be used to delineate certain sections (portions) of the rotatable tube. The higher circumferential ridges may help keep the balls in these certain portions of the tube for a longer period of time. The higher circumferential ridges may also help keep the balls in these certain portions of the tube for a more uniform period of time. This may be because the balls tend to leave that section only when having grown above a certain size. This can be advantageous in the case where it is desirable to keep the balls in certain portions of the rotatable tube in order to dose them with additional material and/or liquid (e.g. water). By using the higher circumferential ridges at selective positions, for example just downstream of the doing means, the balls may receive a more even and/or uniform dose of the additional material and/or liquid.

The term balling machine will be understood by the person skilled in the art to be a machine designed to agglomerate particles of material. The agglomerates produced may be of a variety of cross-sectional shapes including, but not limited to, circular and oval. Balling Machines may also be referred to as manufactured aggregate machines, aggregate manufacturing machines, or pelletising machines. The balling machine may be useable in the manufacture of Hydraulically Bound Material (HBM).

The scraper comprises a scraping edge which comprises the teeth and the recesses. The term teeth may also be taken to encompass serrations and like projections.

The scraper may extend along substantially the whole length of the rotatable tube. The scraping edge may be arranged such that the circumferential ridges are permitted to form along substantially the whole length of the rotatable tube.

The scraping edge may comprise a series of teeth separated by the recesses. The teeth and/or the recesses may be positioned at substantially regular intervals along the length of the scraper.

The scraping edge may be arranged to form (i.e. the scraping edge may be arranged such that the material is permitted to build-up into) a series of circumferential ridges. The circumferential ridges may be positioned at substantially regular intervals along the length of the rotatable tube.

The second recess may have a depth greater than the depth of the first recess. The first recess may have a first depth. The second recess may have a second depth. There may be a plurality of the first (shallower) recesses interspersed with one or more of the second (deeper) recesses.

The first recess may permit material to build up to a first circumferential ridge. The second recess may permit material to build up to a second circumferential ridge. The first circumferential ridge may have a first maximum height. The second circumferential ridge may have a second maximum height. The second circumferential ridge may have a maximum height greater than the maximum height of the first circumferential ridge. The series of circumferential ridges may comprise a plurality of the first (smaller) circumferential ridges interspersed with one or more of the second (higher) circumferential ridges.

The plurality of recesses may comprise two or more sets of first recesses. Each set of first recesses may comprise a plurality of adjacent first recesses. Each first recess in a set of first recesses may have substantially the same depth. Each set of first recesses may have the same number or a different number of first recesses.

Each set of first recesses may be separated by a second recess. The second recess may be deeper than each of the first recesses in an adjacent set. The sets of first recesses may be positioned on each side of the second recess. The sets of first recesses may be positioned directly on each side of (i.e. on each side of and adjacent to) the second recess.

The sets of first recesses may be separated from each other by only a single second recess. Alternatively, the sets of first recesses may be separated from each other by a plurality of second recesses, optionally having substantially the same depths. Each second recess may be separated by a plurality of first recesses. All the second recesses may have substantially the same depth (the second depth).

The first recesses between each second recess may be considered as a set of first recesses. The space in between the second recesses may be populated by the first recesses.

Once formed, the circumferential ridges may therefore comprise two or more sets of first circumferential ridges. Each set of first circumferential ridges may comprise a plurality of adjacent first circumferential ridges. Each first circumferential ridge in a set of first circumferential ridges may have the same maximum height. Each set of first circumferential ridges may have the same number or a different number of first circumferential ridges.

Each set of first circumferential ridges may be separated by a second circumferential ridge. The second circumferential ridge may have a greater maximum height than each of the first circumferential ridges in an adjacent set. The sets of first circumferential ridges may be positioned on each side of the second circumferential ridge. The sets of first circumferential ridges may be positioned directly on each side of (i.e. on each side of and adjacent to) the second circumferential ridge.

The sets of first circumferential ridges may be separated from each other by only a single second circumferential ridge. Alternatively, the sets of first circumferential ridges may be separated from each other by a plurality of second circumferential ridges optionally having substantially the same maximum heights. Each second circumferential ridges may be separated by a plurality of first circumferential ridges. All the second circumferential ridges may have substantially the same first maximum height.

The first circumferential ridges between each second circumferential ridge may be considered as a set of first circumferential ridges. The space in between the second circumferential ridges may be populated by the first circumferential ridges.

There may be one or more further recess having a depth different to the first and second recesses. For example there may be a third, fourth, fifth etc. recess each having a different depth to the other recesses. The one or more further recesses may be arranged so as to permit material to build up into circumferential ridges having different maximum heights to the first and second recesses. The one or more further recesses may be interspersed between the first and second recesses.

The scraping edge may comprise a repeating pattern (unit) comprising a plurality of first recesses and one or more second recess. The circumferential ridges may therefore comprise a repeating pattern (unit) comprising a plurality of first circumferential ridges and one or more second circumferential ridges.

The depth of a recess may be measured from a notional edge of the scraper which extends along the distal ends of the teeth. This notional edge may be parallel to the internal surface of the rotatable tube. The notional edge may be straight. The notional edge may essentially mark an outer boundary of the scraping edge. The depth of the recess may be measured from the lowermost point of the recess to the distal end of an adjacent tooth, preferably the depth is measured using the tooth on the up-stream side of the recess (i.e. the side closest to the end where the material is fed into the rotatable tube).

The height of a circumferential ridge may be measured from the peak of the circumferential ridge to the lowermost point of an adjacent trough, preferably the height is measured using the trough on the up-steam side of the circumferential ridge (i.e. the side closest to the end where the material is fed into the rotatable tube). The maximum height of a circumferential ridge may be considered to be the maximum height that the circumferential ridges can reach before interacting with, and thus further material being scraped away by, the scraper. Alternatively, the height of the circumferential ridges may be measured from the internal surface of the rotatable tube.

The optimal number of first (smaller) and second (higher) circumferential ridges, and their respective dimensions and arrangements, may depend on the dimensions of the tube, and also may depend on the nature of the material being balled.

The scraping edge may comprise up to eight second recesses, optionally there are one to three second recesses, and optionally there are two second recesses. Thus the circumferential ridges may comprises up to eight second circumferential ridges, optionally there are one to three second circumferential ridges, and optionally there are two second circumferential ridges.

The scraping edge of the scraper may be configured such that the second circumferential ridges may be spaced at substantially regular intervals along the length of the scraper and/or the rotatable tube. For example, in the case of there being two second circumferential ridges, the second circumferential ridges may be positioned at one third of the way along the length of the rotatable tube and at two thirds of the way along the length of the rotatable tube.

Each second recess may be separated by at least 2, at least 5, at least 10, or at least 15 of the first recesses. Each second recess may be separated by less than 30, less than 25, or less than 20 of the first recesses.

Each second circumferential ridge may be separated by at least 2, at least 5, at least 10, or at least 15 of the first circumferential ridges. Each second circumferential ridge may be separated by less than 30, less than 25, or less than 20 of the first circumferential ridges.

Each first recess may have the substantially the same depth along the length of the scraper. Each second recess (if there is more than one) may have the substantially the same depth along the length of the scraper. Each first recess between two second recesses, and/or between a second recess and an end of the scraper, may have a first depth. The second recess(es) may be the deepest recess(es) in the scraping edge of the scraper.

Each first circumferential ridge may have substantially the same maximum height along the length of the scraper. Each second circumferential ridge (if there is more than one) may have substantially the same maximum height along the length of the scraper. Each first circumferential ridge between two second circumferential ridges, and/or between a second circumferential ridge and an end of the rotatable tube, may have a first maximum height. The second circumferential ridge(s) may be the circumferential ridge(s) with the greatest maximum height on the internal surface of the rotatable tube.

The first recesses may have a depth of 20mm to 150mm, preferably 60mm to 100mm, for example 80mm. The second recesses may have a depth of 100mm to 400mm, preferably 150mm to 250mm, for example 200mm.

The scraping edge of the scraper may be arranged such that the first circumferential ridges have a maximum height of 20mm to 150mm, preferably 60mm to 100mm, for example 80mm. The scraping edge of the scraper may be arranged such that the second circumferential ridges have a maximum height of 100mm to 400mm, preferably 150mm to 250mm, for example 200mm.

The second recess(es) may each have a depth which is deeper than the each of the first recesses, or each first recess in an adjacent set, by at least 50%, at least 100%, at least 200%, or at least 300%. The scraping edge of the scraper may be arranged such that the second circumferential ridge(s) each have a maximum height which is greater than the maximum height of each of the first circumferential ridges, or each of the first ridges in an adjacent set, by at least 50%, at least 100%, at least 200%, or at least 300%.

The height of the circumferential ridges may be substantially equal to their width. The circumferential ridges may generally have better structural integrity if their height is equal to their width. The width may be the average width of the circumferential ridge and/or the width at the base of the circumferential ridge. Therefore the scraper is preferably arranged to permit the circumferential ridges to build-up to a maximum height that is equal to their width.

The scraper may be arranged to reciprocate. The scraper may be arranged to reciprocate in a direction parallel to the longitudinal axis of the rotatable tube. The only movement of the scraper may be a lengthways reciprocation. The scraper may be in a fixed position in a plane perpendicular to the longitudinal axis of the rotatable tube. In other words, the scraper may be arranged so as not to move (e.g. rotate) about the longitudinal axis of the tube and/or not to move (e.g. rotate) about the longitudinal axis of the scraper itself.

The scraper may comprise an elongate body. The scraper may comprise mounting portions at each end for mounting the scraper in position in the rotatable tube. The mounting portions may be arranged to mount to a reciprocating drive means.

The scraping edge of the scraper may be arranged such that the circumferential ridges have a separation of 150mm to 400mm, preferably 180mm to 250mm, for example 200mm. In the case of a reciprocating scraper, the separation between the circumferential ridges may be a function of the pitch of the reciprocation (i.e. the distance over which the scraper reciprocates) and the width of the teeth.

The teeth and/or recesses may be quadrilateral in shape. For example, the recesses may be in the form of a quadrilateral cut out. The scraping edge may have a castellated profile. The teeth and/or recesses may have tapered sides. The recesses may taper inwards away from the notional outer edge of the scraper. The teeth may taper outwards away from the notional outer edge of the scraper. The teeth and/or recesses may comprise a curved shape. The scraping edge may have an undulating profile. The teeth and/or recesses recess may be triangular in shape. Other arrangements of the scraping edge may be possible, for example the scraping edge may comprise a mixture of straight and curved surfaces which form the teeth and/or recesses. The teeth need not comprise a defined gap therebetween, in embodiments the teeth may run into each other, i.e. one tooth starts where the other ends. The distal ends of the teeth may all be aligned along the notional edge of the scraper.

The recess may have a rhomboid or a parallelogram shape such that both sides of the recesses/teeth are angled in the same direction. Preferably the upstream side of the teeth make an obtuse angle to the base of the recess and the downstream side of the teeth make an acute angle to the base of the recess. This may form a circumferential ridge profile which slopes towards the outlet end of the rotatable tube, the upstream side of the circumferential ridge being at an acute angle to the internal surface of the rotatable tube. This may slow the progress of the balls through the rotatable tube and thereby increase the residence time of the balls in the rotatable tube.

The internal surface of the rotatable tube may be smooth as between a first end of the rotatable tube and a second end of the rotatable tube. In other words, the internal surface of the rotatable tube may be straight, as between a first end of the rotatable tube and a second end of the rotatable tube, in a direction parallel to the longitudinal axis of the rotatable tube.

The internal surface of the rotatable tube may comprise one or more projections such that the circumferential ridges may build-up on the projections. The projections may be circumferential. The projections may be hollow. For example the projections may be formed of box sections of material. The projections may be integral with the rotatable tube. Alternatively, the projections may be separate parts which are attached, for example welded, onto the rotatable tube. The projections may reduce the amount of material required to build-up in order to form the circumferential ridges. This may reduce the weight of the rotatable tube in use. Preferably there are projections at positions corresponding to the positions of the second circumferential ridges, such that the second circumferential ridges can be built-up on the projection.

The projections may each be of a smaller width than the width of the corresponding circumferential ridge to be built up on the projection. There may be one projection per particular circumferential ridge. The projections may be disposed at positions between the teeth, i.e. within the recesses, of the scraper. The internal surface of the rotatable tube may be straight, as between a first end of the rotatable tube and a second end of the rotatable tube, aside from the projections.

The scraper may comprise one or more detachable blades that provide the scraping edge. The detachable blades may each comprise teeth and recesses. The detachable blades may advantageously be replaced when they become worn or broken without having to replace the whole scraper. The position of the blades may be adjustable. The distance of the blades from the internal surface of the rotatable tube may be adjustable. The blades may comprise elongate holes for adjusting the distance of the blade from the internal surface of the tube. The blades may be fastened, for example bolted, onto the rest of the scraper using the elongate holes. The blades may be formed of carbon steel, preferably a high carbon steel. There may be gaps between the blades so as to allow for misalignment of the blades.

The balling machine may be for use in the manufacture of aggregate. The balling machine may be for balling metallurgical waste, for example steelworks and/or ironworks waste. The balls may be for reuse in the steelmaking and/or ironmaking process.

The rotatable tube may have a substantially circular cross section. The rotatable tube may be substantially cylindrical. The rotatable tube may have an off-circular or irregular cross section. The rotatable tube may be elongate. The rotatable tube may have a length up to 30m. The rotatable tube may have a length up to 28m. The length of the rotatable tube may be more than 5m. The length of the rotatable tube may be between 8m and 20m; for example the length may be 10m. The rotatable tube may have an internal diameter between 0.5m and 5m, or between 1m and 3.5m; for example the internal diameter may be 2m.

The rotatable tube may be inclined such that the inlet end is elevated with respect to the outlet end. The incline may be at an angle between 1 degree and 30 degrees, or between 1 degree and 20 degrees; for example 10 degrees.

The balling machine may be arranged to produce balled material having an average particle size greater than 0.5mm, or greater than 1mm, or greater than 5mm or greater than 10mm. The balling machine may be arranged to produce balled material having an average particle size less than 50mm, or less than 30mm, or less than 20mm, or less than 15mm. For example, the average particle size may be between about 10mm and about 50mm. It may be possible to use the balling machine to simultaneously produce balled material having a range of particle sizes.

The balling machine may comprise a liquid input device and/or a solid material input device arranged to input fluid and/or solid material into the rotatable tube. The input devices may be arranged such that the input of the fluid and/or solid material is confined to being between two second circumferential ridges and/or between a second circumferential ridge and an end of the pipe.

The present invention provides, according to a second aspect, a method of balling material using the balling machine according to the first aspect of the invention, the method comprising the steps of:
providing a material into the rotatable tube and rotating the rotatable tube so as to form balls;
wherein a part of the material builds-up on the internal surface of the rotatable tube and is scraped by the scraper;
wherein the scraper controls the build-up such that the material forms a plurality of circumferential ridges on the internal surface of the rotatable tube; and
wherein two or more of the circumferential ridges have different maximum heights.

When the circumferential ridges are built-up to their maximum heights, the circumferential ridges extend into the recesses between the teeth of the scraper and any further build-up of material is scraped away by the scraping edge that defines the deepest part of the recess.

The term forming balls will be understood by the person skilled in the art to mean agglomerating particles of material. As above, the agglomerates produced may be of a variety of cross-sectional shapes including, but not limited to, circular and oval. Forming balls may comprise binding of the material. The method of balling material may produce Hydraulically Bound Material (HBM). Forming balls may comprise pelletizing.

The material may be in the form of particles and/or grains. For example the material may be in the form of dust and/or fines. The dust and/or fines may comprise particles of which more than 90% by mass have a size of between 1 micron and 6mm, or between 1 micron and 1mm; for example 0.5mm. The size may be the mean greatest dimension of the particle. The material may be in the form of sludge and/or slurry. The sludge and/or slurry may comprise dust and/or fines.

The material may comprise a metallurgical waste material. The metallurgical waste material may be a metallurgical waste product (or by-product) of an ironmaking and/or a steelmaking process, for example the Basic Oxygen Steelmaking (BOS) process. The metallurgical waste material may comprise, for example, at least one of: waste oxides, flue dust, sludge and/or slag. The material may comprise at least one of: Hot Mill sludge, Basic Oxygen Steelmaking (BOS) slurry, nautilus, blast furnace flue dust, BOS plant flue dust, and/or betsi. The metallurgical waste material may be, or have been, in the form of a slurry.

The metallurgical waste materials may comprise iron (iron containing metallurgical waste material), which may be in the form of iron oxide. The metallurgical waste may have an average iron content of between 40% and 70%, or 50% and 60% by weight.

The material may comprise steelmaking slag, ironmaking slag, waste material from quarrying, waste material from construction, waste material from demolition, waste material from waste recycling, and/or landfill leachate. The material may additionally comprise cementitious material.

The present invention has particular advantage when processing materials such as sludge, slurry and dust from iron and/or steelmaking processes. These materials tend to be relatively heavy, sticky and oily. When attempting to ball such material the material tends to slide down the sides of the rotatable tube (as one mass) instead of being lifted and tumbled. In some cases the oil from the material can create a lubricating film on the sludge which increases the tendency of the material to slide. The lifting and tumbling is however an important part of the agglomeration process. The circumferential ridges on the inside of the rotatable tube increase the surface area of the rotatable tube and also increase the friction between the surface of the rotatable tube and the material being balled. This reduces the tendency of the material to slide down the sides of the rotatable tube and increases the lifting and tumbling effect, which in turn increases the efficiency of the balling process.

The present invention has also been found to have particular application to processing metallurgical waste product (or by-product) from the mining of metal ore and/or the extraction of metal from its ore. Mining and metal extraction processes (e.g. smelting) can generate dust and/or fines which contain an appreciable percentage of metal. However, due to the small particle size, the dust and/or fines cannot be easily used or reused in some metal extraction processes. When smelting, for example, fine particles might enter the airflow and be lost from the chimney or clog parts of the system. Such material can therefore simply be treated as waste, and may be sent to landfill or otherwise dumped in the surrounding environment. The balling machine of the present invention may be used to agglomerate said material, the particle size thereby being increased, such that the material can be subject to a metal extraction process (e.g. smelting).

Accordingly, the metallurgical waste material may be a metallurgical waste product (or by-product) obtained from a process of mining a metal ore and/or extracting a metal from a metal ore (e.g. smelting). The metallurgical waste material may comprise metal ore, optionally dust and/or fines of metal ore. The metallurgical waste material may be obtained from a dust extraction system operated during said mining and/or extracting. The dust extracted by the dust extraction system may have a particle size of less than 50 microns, less than 20 microns, or less than 10 microns. The metal may, for example, be nickel.

The material may comprise a binder material, an absorber material and/or liquid, such as water. The binder material may comprise at least one of the following: a cementitious material (e.g. Portland cement), recycled steelwork fines, recycled ashes, and/or dusts from power stations. The binder material may be selected in dependence on the particular material being balled. The absorber material may absorb and retain at least some of the liquid present in the material being balled. It will be appreciated that the precise quantities of binder material, absorber material and/or liquid to be added may depend on the composition of the material to be balled (e.g. the composition of the metallurgical waste material).

In embodiments, the metallurgical waste material is balled without pretreatment beyond the optional addition of a binder material, an absorber material and/or liquid.

The method may comprise using the balls of material formed in the balling machine in an ironmaking process, a steelmaking process, or a process of extracting metal from a metal ore (e.g. smelting).

The present invention may provide, according to a further aspect of the invention, a method comprising: performing a first process during which a metallurgical waste material (or by-product) is generated, performing the method of balling material according to the second aspect so as to form the metallurgical waste material (or by-product) into balls, and using the balls as in input material in a further instance of performing the first process. The first process may be an ironmaking process, a steelmaking process or a process of extracting metal from a metal ore. By way of example, the method may comprise: smelting nickel ore whilst extracting dust that contains at least some nickel, performing the method of balling so as to from the dust into balls, and smelting the balls so as to extract nickel from the balls.

The present invention provides, according to a third aspect, a scraper for controlling the build-up of material on the inside surface of a rotatable tube of a balling machine, the scraper comprising:
a scraping edge comprising a plurality of teeth and a plurality of recesses between the teeth, wherein in use the arrangement of the teeth and the recesses permit the material to build-up into a plurality of circumferential ridges on the inside surface of the rotatable tube;
wherein a first and a second of the recesses have different depths to permit at least two of the circumferential ridges to build-up to different maximum heights.

The balling machine may be a balling machine according to any preceding aspect of the invention. The scraper may have any of the features as described in relation to the preceding aspects of the invention.

It will be understood that descriptions relating to the profile of the scraping edge of the scraper can be used to deduce descriptions of the profile of the circumferential ridges, and vice versa.

The term substantially the whole length may be seen as encompassing the whole length. The term substantially regular intervals may be seen as encompassing regular intervals. The term substantially the same depth may be seen as encompassing the same depth. The term substantially the same maximum height may be seen as encompassing the same maximum height. The term substantially equal to their width may be seen as encompassing equal to their width. The term substantially circular may be seen as encompassing circular. The term substantially cylindrical may be seen as encompassing cylindrical.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows a perspective side view of a balling machine according to a first embodiment of the invention;
Figure 2 shows a perspective front view of a scraper according to a first embodiment of the invention;
Figure 3 shows a perspective rear view of a portion of a scraper according to a first embodiment of the invention;
Figure 4 shows a second perspective front view of a portion of a scraper according to a first embodiment of the invention;
Figure 5 shows a face on view of a scraper blade of the first type according to a first embodiment not according to the invention;
Figure 6 shows a face on view of a scraper blade of a second type according to a first embodiment of the invention;
Figure 7 shows a cross sectional side view of a portion of the rotatable tube according to a first embodiment of the invention;
Figure 8 shows a cross sectional side view of the rotatable tube according to a first embodiment of the invention;
Figure 9 shows a cross sectional side view of a portion of the rotatable tube according to a second embodiment of the invention;
Figure 10 shows a face on view of a scraper blade of a second type according to a third embodiment not according to the invention; and
Figure 11 shows a perspective front view of a scraper according to a fourth embodiment of the invention.

### Detailed Description

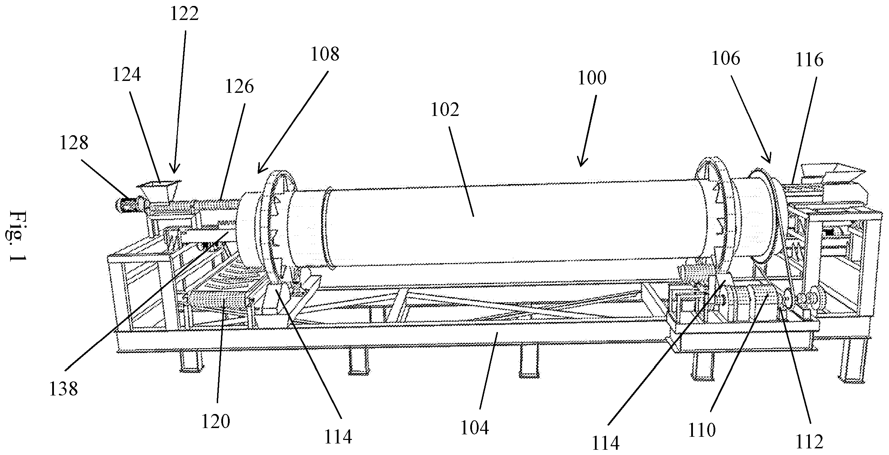

Figure 1 shows a balling machine 100 according to a first embodiment of the invention. Balling machine 100 comprises a rotatable tube 102 supported upon a frame 104. As can be seen the frame 104 is arranged so that the inlet end 106 of the rotatable tube 102 is elevated with respect to the outlet end 108. The rotatable tube 102 is therefore inclined at an angle of approximately 7 degrees. Hydraulic jacks (not shown) are provided at either end of the frame 104 enabling the angle of elevation to be altered. A motor 110 is provided which, in use, drives a chain and sprocket system 112 which in turn drives rotational movement of the rotatable tube 102. Rollers 114 provided proximate either end of the rotatable tube 102 allow the rotatable tube 102 to rotate with respect to the frame 104.

At the inlet end 106 of the rotatable tube 102 an inlet conveyor 116 is provided. In use, input materials such as waste fines and dust are deposited onto inlet conveyor 116. Inlet conveyor 116 then transports the input material into the input end 106 of rotatable tube 102. Inlet conveyor 116 is driven by a motor provided adjacent to the conveyor. The inlet conveyor 116 terminates within the rotatable tube 102. In use, input material falls from the end of the conveyor into the rotatable tube 102.

Below the outlet end 108 of the rotatable tube 102 an exit conveyor 120 is provided. In use, balled material falls from the outlet end 108 of the rotatable tube 102 and onto the exit conveyor 120. The exit conveyor 120 is arranged to transport material away from the rotatable tube 102.

An input unit 122 for adding binder materials and/or absorber material is provided on the frame 104. Input unit 122 comprises hopper 124 which feeds feed pipe 126. A screw is provided within the feed pipe 126 for transporting material along it. Motor 128 is provided at an end of the feed pipe 126 to drive the screw. Feed pipe 126 extends into the outlet end 108 of the rotatable tube 102 and substantially parallel to the rotatable tube 102. Feed pipe 102 is positioned proximate the top of the rotatable tube 102 in order to reduce the chance of interfering with the material being balled.

A liquid input device (not shown) for delivering fluid into the tube is also provided in the rotatable tube 102. The liquid input device comprises a pipe extending along the top of the rotatable tube 102, the pipe having a plurality of nozzles distributed along its underside for delivering liquid into the rotatable tube 102.

A scraper 138 is disposed within the rotatable tube 102. The scraper 138 extends substantially parallel to the longitudinal axis of the rotatable tube 102, along one side of the tube 102, and is proximate the internal surface of the tube rotatable 102. A motor is arranged to drive the scraper 138 in a reciprocating motion substantially parallel to the longitudinal axis of the rotatable tube 102.

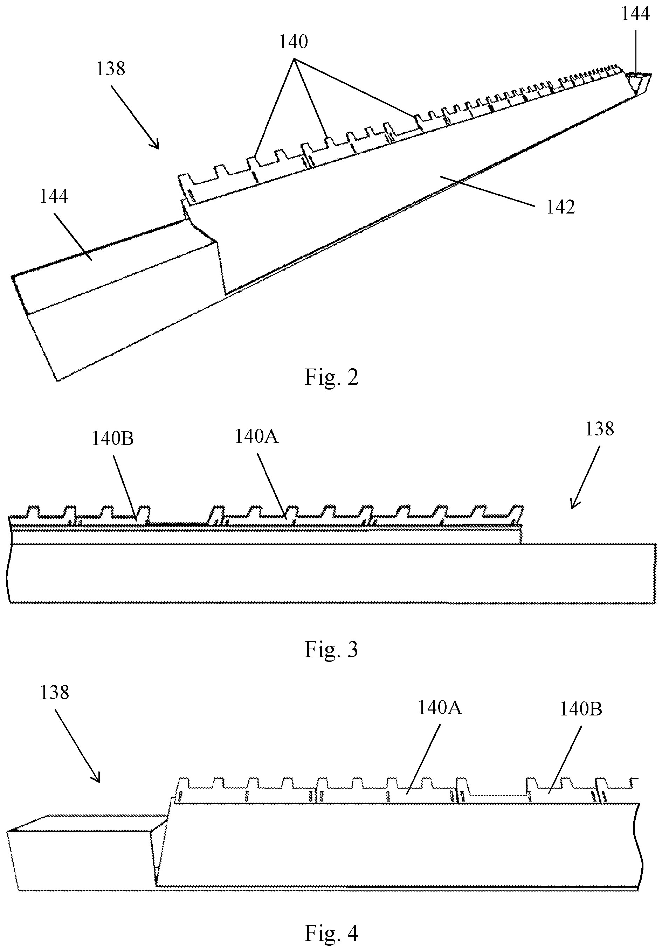

Figures 2 to 4 show the scraper 138 in isolation. The scraper 138 comprises an elongate body 142 and a plurality of scraper blades 140 detachably mounted to the elongate body 142. The elongate body 142 comprises a mounting portion 144 at each end for mounting to the reciprocating drive means. The square sections of the mounting portions 144 are captivated in a bearing cassette unit which facilitates the reciprocating movement. The scraper blades 140 together define a scraping edge of the scraper 138.

The scraper blades 140 each comprise three elongate holes 145 via which they are bolted to the elongate body 142. The elongate holes allow each scraper blade 140 to be repositioned on the elongate body 142 so as to allow the scraping edge to be moved towards and away from the internal surface of the rotatable tube 102.

The scraper blades 140 each comprise a plurality of teeth 146 and recesses 148 between the teeth 146. The scraper 138 comprises two types of scraper blade 140 with different arrangements of the teeth 146 and recesses 148. A first type of scraper blade 140A and a second type of scraper blade 140B.

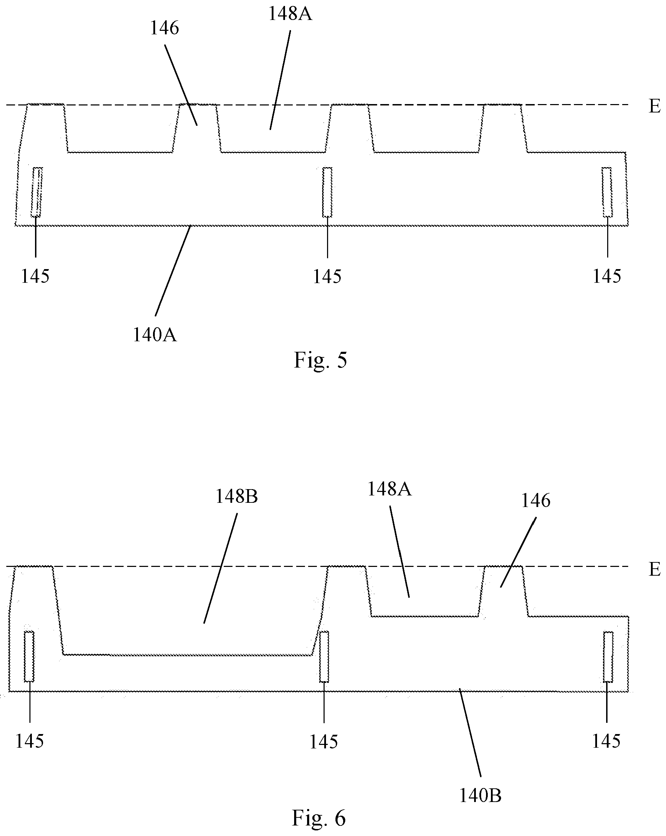

Figure 5 shows the first type of scraper blade 140A in more detail. The scraper blade 140A comprises a plurality of teeth 146 and a plurality of first (shallower) recesses 148A between the teeth. The first recesses 148A each have the same depth.

Figure 6 shows the second type of scraper blade 140B in more detail. The scraper blade 140B comprises a plurality of first (shallower) recesses 148A and a single second (deeper) recess 148B. The second recess 148B is about twice as deep as the first recesses 148A as measured from a notional edge E of the scraper (shown as a dashed line in Figures 5 and 6) which extends across the distal ends of the teeth 146.

In the embodiment shown, there are eight scraper blades of the first type 140A and two scraper blades of the second type 140B. The third and seventh scraper blades are of the second type 140B such that the second recesses 148B are positioned approximately one third and two thirds of the way along the scraper 138. The scraping edge of the scraper 138 thus comprises a plurality of first recesses 148A interspersed with two second recesses 148B. The first recesses 148A form three sets of adjacent first recesses 148A, each set of first recesses 148A being separated by a single second recess 148B.

For each type of scraper blade 140, the teeth 146 have side walls which taper outwards away from the notional edge E and consequently the sides of the recesses 148 taper inwards away from the notional edge E.

In use, material to be balled, for example a byproduct from a steelmaking process, for example Hot Mill sludge (i.e. sludge from a Hot Mill), is input into the inlet end 106 of the rotatable tube 102 via inlet conveyor 116. The rotatable tube 102 is rotated so as to lift the material up the side of the rotatable tube 102 and allow it to roll/tumble down the side. This motion causes the material to agglomerate. The material eventually forms into balls which grow in size as they further gather material through the repeated rolling/tumbling motion.

During the above process, a certain amount of the material sticks to the internal surface of the rotatable tube. The layer of material increases in thickness until it interacts with the scraping edge of the scraper 138. The castellated shape of the scraping edge (i.e. the series of teeth 146 and the recesses 148) cause the material to build-up into a series of circumferential ridges on the internal surface of the rotatable tube 102. The series of circumferential ridges comprises a plurality of first (smaller) circumferential ridges 150A, corresponding to the first recesses 148A, interspersed with two second (higher) circumferential ridges 150B, corresponding to the second recesses 148B.

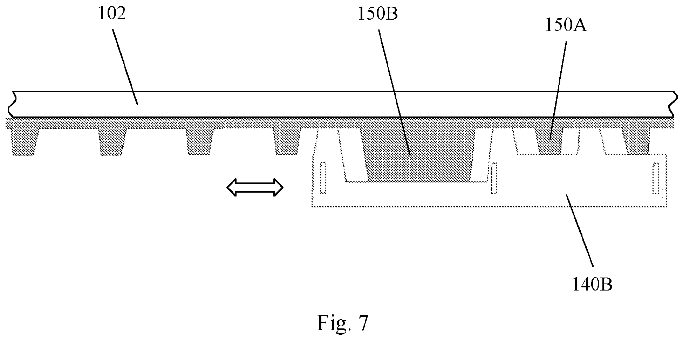

Figure 7 shows a portion of the rotatable tube 102 with the material built up into the circumferential ridges 150A, 105B. A single scraper blade 140B of the second type is shown. A further scraper blade 140A of the first type is positioned to the left of the scraper blade 140B but is not shown in Figure 7. The scraper 138 reciprocates (oscillates) in a direction parallel to the longitudinal axis of the rotatable tube 102 thus forming spaces between the ridges 150A, 150B. The height of the first circumferential ridges 150A is approximately equal to the width at their base. The second circumferential ridges 150B are slightly wider than they are high.

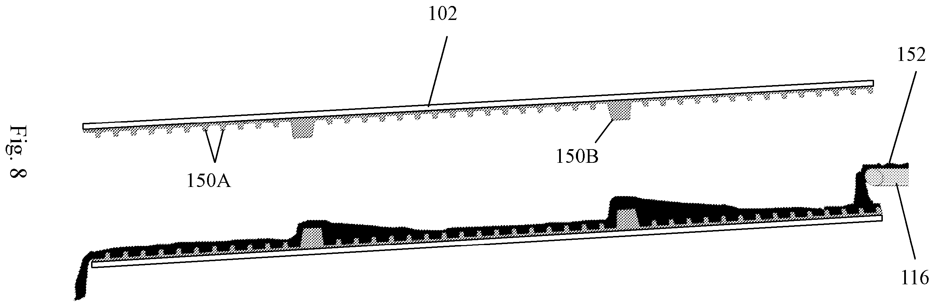

Figure 8 shows the full length of the rotatable tube 102 with the material built up into the circumferential ridges 150A, 105B on the inside surface. The scraper 138 is not shown for clarity. The circumferential ridges 150A, 105B are positioned at regular intervals along the rotatable tube 102 with the second circumferential ridges 150B being positioned at approximately one third and two thirds of the way along the rotatable tube 102.

The material being balled 152 is shown being fed into the inlet end 106 of the rotatable tube 102 using inlet conveyor 116. As the rotatable tube 102 is rotated the material being balled 152 progresses through the rotatable tube 102 under the influence of gravity due to the slight elevation of the inlet end 106 relative to the outlet end 108. The circumferential ridges 105A, 150B increase the contact area and friction between the material being balled 152 and the internal surface of the tube 102. This helps lift the material higher up the sides of the rotatable tube 102 and encourage the material to roll down the side rather than sliding down in one mass.

As shown in Figure 8, the material being balled 152 backs up behind the second circumferential ridges 150B due to their increased height. The second circumferential ridges 150B therefore act as baffles in the rotatable tube 102. The layer of material 152 is deeper behind the second circumferential ridges 150B. The larger balls of material tend to rise to the top of the material that has collected behind the second circumferential ridges 150B and therefore the larger balls tend to spill over the second circumferential ridges 150B first. The smaller balls tend to stay behind the second circumferential ridges 150B for longer where they agglomerate and grow before themselves spilling over and continuing down the rotatable tube 102.

The material being balled 152 eventually makes its way out of the outlet end 108 of the rotatable tube 102 and falls onto the exit conveyor exit conveyor 120. In Figure 8 the material being balled 152 is depicted as one mass but will be made up of many particles of material which, at least towards the outlet end 108 of the rotatable tube 102, will have formed into balls.

In embodiments, water is sprayed into the rotatable tube 102 to start the agglomeration. In embodiments, the water is sprayed into the rotatable tube 102 in an area between the inlet end 106 of the rotatable tube 102 and one of the second circumferential ridges 150B. For example, between the inlet end 106 of the rotatable tube 102 and the first of the second circumferential ridges 150B reached by the material.

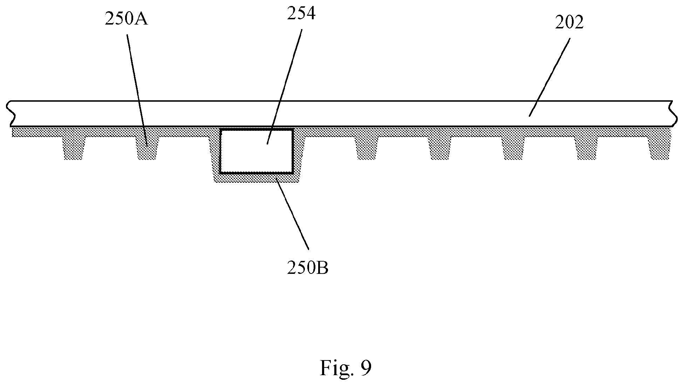

Figure 9 shows a shows a portion of a rotatable tube 202 according to a second embodiment of the invention. According to the second embodiment, the rotatable tube 202 comprises a circumferential projection 254 mounted to the internal surface of the rotatable tube 202. The projection 254 is in the form of steel box section welded onto the internal surface of the rotatable tube 202.

The projection 254 is slightly smaller than a second recess in the scraper blade (not shown) and is positioned such that it corresponds to the position of the second circumferential ridge 250B. The second circumferential ridge 250B therefore builds up on the projection 254.

Provided that the projection 254 is on average less dense that the material being balled, the projection 254 therefore may reduce the weight of the rotatable tube 202 during the balling process (as compared to the case where the projection 254 is not present). This may result in less energy being required to rotate the rotatable tube 202. The projection 254 can also reduce the time necessary to build-up the second circumferential ridge 250B to its full height from the start of the balling process. Further, the material that has built up on the internal surface of the rotatable tube 202 may occasionally break-off and fall into the rotatable tube 202. The second projection may help prevent any overly large pieces, associated with the second circumferential ridge 250B, breaking off and falling into the rotatable tube 202.

A second projection and a second circumferential ridge are also present on the rotatable tube 202. However, these are not shown in the particular portion of Figure 9.

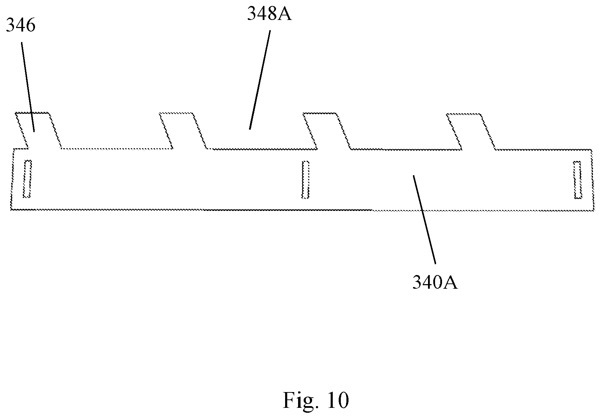

Figure 10 shows a first type of scraper blade 340A. The scraper blade 340A comprises a plurality of teeth 346 and recesses 348A. The recesses 348A have a parallelogram shape such that both sides of each tooth 346 are parallel to each other and are at an angle to the base of the recess 348A. The upstream side of the teeth 346 makes an obtuse angle to the base of the recess 348A and the downstream side of the teeth 346 make an acute angle to the base of the recess 348A. In use, the scraper blade 340A forms a plurality of circumferential ridges which slope towards the inlet end of the rotatable tube, the upstream side of each circumferential ridge being at an acute angle to the internal surface of the rotatable tube. This slows the progress of the balls through the rotatable tube and thereby increases the residence time of the balls in the rotatable tube. A second type of scraper blade, analogous to the second type of scraper blade 140B of the first embodiment, comprising a recess of a different depth, would also be provided on a scraper in use.

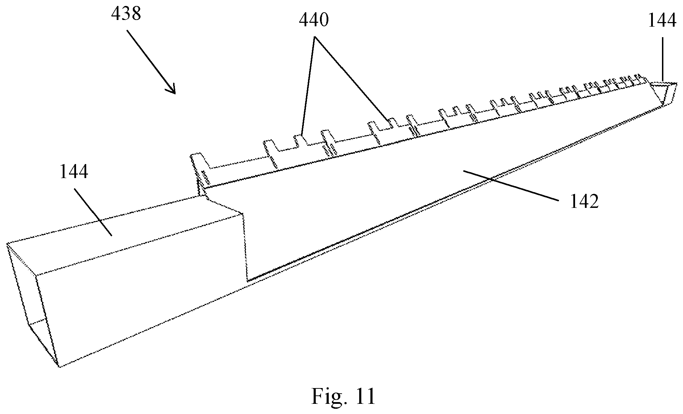

Figure 11 shows the scraper 438 according to a fourth embodiment of the invention. The scraper 438 according to the fourth embodiment is similar to the scraper 138 of the first embodiment, in that the scraper 438 of the fourth embodiment comprises the same elongate body 142 with mounting portions 144 at each end. The Scraper 438 differs in that the scraper 438 comprises only one type of scraper blade 440, which is similar to the second type of scraper blade 140B.

In the fourth embodiment, the scraping edge of the scraper 438 thus comprises a plurality of sets of first (shallower) recesses, each set of first recesses comprising two first recesses, and each set of first recesses being separated by a single second (deeper) recess. The scraping edge therefore comprises a repeating pattern (repeating unit) comprising a two first recesses and one second recess. In use, the circumferential ridges of material formed (carved out) by the scraper 438 therefore comprise a repeating pattern comprising two first (smaller) circumferential ridges and one second (higher) circumferential ridge. Such a ridge profile may help slow the progress of the material through the rotatable tube, as the material is faced with a larger amount of higher ridges to overcome. By not having all the ridges with a uniform increased height, it may reduce the chances of the balls getting 'stuck' between two high ridges and not progressing through the rotatable tube.

A method of balling material using the balling machine 100 will now be described according to a further embodiment of the invention. The method comprises providing a metallurgical waste material in the form of dust extracted from a process of extracting nickel from nickel ore, specifically of smelting nickel ore. The dust is obtained from a dust extraction system and consists of particles of which more than 90% by mass have a size of less than 10 microns. The dust contains 1.5% nickel by weight, which contrasts with 2% nickel by weight of some nickel ores.

The dust is mixed with a binder, which in this case is Portland cement, such that the resulting mix is 10% by weight of binder. In alternative embodiments, binder is added such that resulting mix is between 2% and 15% binder by weight.

Water is then added which hydrates the cement. The water is mixed with the binder and dust mix in a ratio of 1 part water to 10 parts dust and binder by weight.

The wetted dust and binder mix is then input into the inlet end 106 of the rotatable tube 102 via inlet conveyor 116, and the balling machine 100 is operated to rotate the rotatable tube 102 so as to form balls. The balls exit the rotatable tube 102 via outlet end 108.

The balls formed by the balling machine 100 can then be laid out and allowed to dry. After a period of drying, which can take place for at least a day at room temperature, the balls may be use as an input material in the smelter.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

**In** embodiments, the scraper is arranged such that the second circumferential ridges are positioned at different locations within the rotatable tube. **In** the above described embodiments the scraper has two types of recess, each having type having a particular depth. **In** other embodiments, there are further types of recess having different depths to the first and second recesses. For example, there may be three or more types of recess, each having a different depth, such that circumferential ridges of three or more different heights can form.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A balling machine (100) comprising:
a rotatable tube (102, 202) arranged to receive a material therein and to rotate so as to cause the material to form balls; and
a scraper (138, 438) arranged to control the build-up of the material on the inside surface of the rotatable tube (102, 202);
wherein the scraper (138, 438) comprises a scraping edge comprising a plurality of teeth (146, 346) and a plurality of recesses (148A-B) between the teeth (146, 346), wherein the arrangement of the teeth (146, 346) and the recesses (148A-B) permit the material to build-up into a plurality of circumferential ridges (150A-B) on the inside surface of the rotatable tube (102, 202); and
**characterised in that** a first and a second of the recesses (148A-B) have different depths so as to permit at least two of the circumferential ridges (150A-B) to build-up to different maximum heights.

2. A balling machine (100) according to claim 1, wherein the plurality of recesses (148A-B) comprises two or more sets of first recesses (148A), each set of first recesses (148A) being separated by a second recess (148B), the second recess (148B) being deeper than each of the first recesses (148A) in an adjacent set of first recesses (148A).

3. A balling machine (100) according to claim 1 or 2, wherein the second recess (148B) is at least 50% deeper than the first recess (148A).

4. A balling machine (100) according to any preceding claim, wherein the recesses (148A-B) are positioned at substantially regular intervals along the length of the scraper (138, 438) such that the circumferential ridges (150A-B) are distributed at substantially regular intervals along the internal surface of the rotatable tube (102, 202).

5. A balling machine (100) according to any preceding claim, wherein the scraper (138, 438) comprises one or more detachable blades (140A, 140B) that provide the plurality of teeth (146, 346) and the plurality of recesses (150A-B), and optionally wherein the distance of the blades (140A-B) from the internal surface of the tube (102, 202) is adjustable.

6. A balling machine (100) according to any preceding claim, wherein the scraper (138, 438) is arranged to reciprocate in a direction parallel to the longitudinal axis of the rotatable tube (102, 202).

7. A balling machine (100) according to any preceding claim, wherein the scraper (138, 438) is arranged to permit the circumferential ridges (150A-B) to build-up to a maximum height that is substantially equal to their width.

8. A balling machine (100) according to any preceding claim, wherein the scraper (138) is arranged such that the lateral sides of the recesses taper inwards.

9. A balling machine according to any of claims 1 to 7, wherein the scraper (438) is arranged such that the lateral sides of the recesses slope in the same direction.

10. A balling machine (100) according to any preceding claim, wherein the inside surface of the rotatable tube (102) is smooth as between a first end of the rotatable tube (102) and a second end of the rotatable tube (102).

11. A balling machine according to any of claims 1 to 9, wherein the internal surface of the rotatable tube (202) comprises one or more circumferential projections (254) in positions which correspond to the positions of the second recesses such that the corresponding circumferential ridges (250B) can be built-up on the projections (254).

12. A balling machine (100) according to any preceding claim, wherein the scraper (138, 438) is arranged such that: the first circumferential ridges (150A) have a maximum height of 60mm to 100mm, the second circumferential ridges (150B) have a maximum height of 150mm to 250mm, and/or the circumferential ridges (150A-B) have a separation of 180mm to 250mm between each ridge.

13. A method of balling material using the balling machine (100) of any preceding claim, the method comprising the steps of:
providing a material into the rotatable tube (102, 202) and rotating the rotatable tube (102, 202) so as to form balls;
wherein a part of the material builds-up on the internal surface of the rotatable tube (102, 202) and is scraped by the scraper (138, 438);
wherein the scraper (138, 438) controls the build-up such that the material forms a plurality of circumferential ridges (150A-B) on the internal surface of the rotatable tube (102, 202); and
wherein at least two of the circumferential ridges (150A-B) have different maximum heights.

14. A method according to claim 13, wherein the material has an iron content of between 40% and 70%,

15. A scraper (138, 438) for controlling the build-up of material on the inside surface of a rotatable tube (102, 202) of a balling machine (100), the scraper comprising:
a scraping edge comprising a plurality of teeth (146, 346) and a plurality of recesses (148A-B) between the teeth (146, 346), wherein in use the arrangement of the teeth (146, 346) and the recesses (148A-B) permit the material to build-up into a plurality of circumferential ridges (150A-B) on the inside surface of the rotatable tube (102, 202);
**characterised in that** a first and a second of the recesses (148A-B) have different depths to permit at least two of the circumferential ridges (150A-B) to build-up to different maximum heights.

## Patentansprüche

1. Zusammenballungsmaschine (100) mit:
einem drehbaren Rohr (102, 202), das zum Aufnehmen eines Materials darin und zum Drehen zum Bewirken, dass das Material Ballen bildet, angeordnet ist; und
einem Abstreifer (138, 438), der zum Steuern des Anwachsens des Materials auf der Innenfläche des drehbaren Rohrs (102, 202) angeordnet ist;
bei der der Abstreifer (138, 438) eine Abstreifkante mit mehreren Zähnen (146, 346) und mehreren Vertiefungen (148A-B) zwischen den Zähnen (146, 346) aufweist, wobei die Anordnung der Zähne (146, 346) und der Vertiefungen (148A-B) ermöglichen, dass das Material auf der Innenfläche des drehbaren Rohrs (102, 202) zu mehreren Umfangsgraten (150A-B) anwachsen kann; und
**dadurch gekennzeichnet, dass** eine erste und eine zweite der Vertiefungen (148A-B) unterschiedliche Tiefen aufweisen, so dass ermöglicht wird, dass mindestens zwei der Umfangsgrate (150A-B) zu unterschiedlichen maximalen Höhen anwachsen können.

2. Zusammenballungsmaschine (100) nach Anspruch 1, bei der die mehreren Vertiefungen (148A-B) zwei oder mehr Gruppen von ersten Vertiefungen (148A) aufweisen, wobei jede Gruppe von ersten Vertiefungen (148A) durch eine zweite Vertiefung (148B) abgetrennt ist, wobei die zweite Vertiefung (148B) tiefer als jede der ersten Vertiefungen (148A) in einer benachbarten Gruppe von ersten Vertiefungen (148A) ist.

3. Zusammenballungsmaschine (100) nach Anspruch 1 oder 2, bei der die zweite Vertiefung (148B) mindestens 50% tiefer als die erste Vertiefung (148A) ist.

4. Zusammenballungsmaschine (100) nach einem der vorhergehenden Ansprüche, bei der die Vertiefungen (148A-B) bei im Wesentlichen regelmäßigen Intervallen entlang der Länge des Abstreifers (138, 438) positioniert sind, so dass die Umfangsgrate (150A-B) bei im Wesentlichen regelmäßigen Intervallen entlang der Innenfläche des drehbaren Rohrs (102, 202) verteilt sind.

5. Zusammenballungsmaschine (100) nach einem der vorhergehenden Ansprüche, bei der der Abstreifer (138, 438) ein oder mehrere abnehmbare Blätter (140A, 140B) aufweist, die die mehreren Zähne (146, 346) und die mehreren Vertiefungen (150A-B) bereitstellen, und bei der optional der Abstand der Blätter (140A-B) von der Innenfläche des Rohrs (102, 202) einstellbar ist.

6. Zusammenballungsmaschine (100) nach einem der vorhergehenden Ansprüche, bei der der Abstreifer (138, 438) zum Hin- und Herbewegen in einer Richtung parallel zu der Längsachse des drehbaren Rohrs (102, 202) angeordnet ist.

7. Zusammenballungsmaschine (100) nach einem der vorhergehenden Ansprüche, bei der der Abstreifer (138, 438) zum Ermöglichen, dass die Umfangsgrate (150A-B) zu einer maximalen Höhe, die im Wesentlichen gleich ihrer Breite ist, anwachsen können, angeordnet ist.

8. Zusammenballungsmaschine (100) nach einem der vorhergehenden Ansprüche, bei der der Abstreifer (138) derart angeordnet ist, dass die lateralen Seiten der Vertiefungen nach innen zulaufen.

9. Zusammenballungsmaschine nach einem der Ansprüche 1 bis 7, bei der der Abstreifer (438) derart angeordnet ist, dass die lateralen Seiten der Vertiefungen in derselben Richtung geneigt sind.

10. Zusammenballungsmaschine (100) nach einem der vorhergehenden Ansprüche, bei der die Innenfläche des drehbaren Rohrs (102) glatt wie zwischen einem ersten Ende des drehbaren Rohrs (102) und einem zweiten Ende des drehbaren Rohrs (102) ist.

11. Zusammenballungsmaschine nach einem der Ansprüche 1 bis 9, bei der die Innenfläche des drehbaren Rohrs (202) ein oder mehrere Umfangsvorsprünge (254) an Positionen, die den Positionen der zweiten Vertiefungen entsprechen, aufweist, so dass die entsprechenden Umfangsgrate (250B) auf den Vorsprüngen (254) anwachsen können.

12. Zusammenballungsmaschine (100) nach einem der vorhergehenden Ansprüche, bei der der Abstreifer (138, 438) derart angeordnet ist, dass: die ersten Umfangsgrate (150A) eine maximale Höhe von 60 mm bis 100 mm aufweisen, die zweiten Umfangsgrate (150B) eine maximale Höhe von 150 mm bis 250 mm aufweisen und/oder die Umfangsgrate (150A-B) einen Abstand von 180 mm bis 250 mmm zwischen jedem Grat aufweisen.

13. Verfahren zum Zusammenballen von Material unter Verwendung der Zusammenballungsmaschine (100) nach einem der vorhergehenden Ansprüche, mit folgenden Schritten:
Bereitstellen eines Materials in dem drehbaren Rohr (102, 202) und Drehen des drehbaren Rohrs (102, 202) zum Ausbilden von Ballen;
bei dem ein Teil des Materials auf der Innenfläche des drehbaren Rohrs (102, 202) anwächst und durch den Abstreifer (138, 438) abgestreift wird;
bei dem der Abstreifer (138, 438) das Anwachsen derart steuert, dass das Material mehrere Umfangsgrate (150A-B) auf der Innenfläche des drehbaren Rohrs (102, 202) ausbildet; und
bei dem mindestens zwei der Umfangsgrate (150A-B) unterschiedliche maximale Höhen aufweisen.

14. Verfahren nach Anspruch 13, bei dem das Material einen Eisengehalt von zwischen 40% und 70% aufweist.

15. Abstreifer (138, 438) zum Steuern des Anwachsens von Material auf der Innenfläche eines drehbaren Rohrs (102, 202) einer Zusammenballungsmaschine (100), mit:
einer Abstreifkante mit mehreren Zähnen (146, 346) und mehreren Vertiefungen (148A-B) zwischen den Zähnen (146, 346), wobei bei einer Verwendung die Anordnung der Zähne (146, 346) und der Vertiefungen (148A-B) ermöglichen, dass das Material auf der Innenfläche des drehbaren Rohrs (102, 202) zu mehreren Umfangsgraten (150A-B) anwachsen kann;
**dadurch gekennzeichnet, dass** eine erste und eine zweite der Vertiefungen (148A-B) unterschiedliche Tiefen aufweisen, so dass ermöglicht wird, dass mindestens zwei der Umfangsgrate (150A-B) zu unterschiedlichen maximalen Höhen anwachsen können.

## Revendications

1. Machine de bouletage (100) comprenant :
un tube rotatif (102, 202) conçu pour recevoir un matériau à l'intérieur de celui-ci et pour tourner de manière à amener le matériau à former des billes ; et
un racleur (138, 438) conçu pour réguler l'accumulation du matériau sur la surface intérieure du tube rotatif (102, 202) ;
dans laquelle le racleur (138, 438) comprend un bord de raclage comprenant une pluralité de dents (146, 346) et une pluralité d'évidements (148A-B) entre les dents (146, 346), dans laquelle l'agencement des dents (146, 346) et des évidements (148A-B) permet au matériau de s'accumuler en une pluralité d'arêtes circonférentielles (150A-B) sur la surface intérieure du tube rotatif (102, 202) ; et
**caractérisée en ce qu'**un premier et un second des évidements (148A-B) présentent des profondeurs différentes de manière à permettre à au moins deux des arêtes circonférentielles (150A-B) de s'accumuler à des hauteurs maximales différentes.

2. Machine de bouletage (100) selon la revendication 1, dans laquelle la pluralité d'évidements (148A-B) comprend deux ensembles ou plus de premiers évidements (148A), chaque ensemble de premiers évidements (148A) étant séparé par un second évidement (148B), le second évidement (148B) étant plus profond que chacun des premiers évidements (148A) dans un ensemble adjacent de premiers évidements (148A).

3. Machine de bouletage (100) selon la revendication 1 ou 2, dans laquelle le second évidement (148B) est au moins 50 % plus profond que le premier évidement (148A).

4. Machine de bouletage (100) selon une quelconque revendication précédente, dans laquelle les évidements (148A-B) sont positionnés à des intervalles sensiblement réguliers sur la longueur du racleur (138, 438) de sorte que les arêtes circonférentielles (150A-B) soient réparties à des intervalles sensiblement réguliers le long de la surface interne du tube rotatif (102, 202).

5. Machine de bouletage (100) selon une quelconque revendication précédente, dans laquelle le racleur (138, 438) comprend une ou plusieurs lames détachables (140A, 140B) qui fournissent la pluralité de dents (146, 346) et la pluralité d'évidements (150A-B), et éventuellement dans laquelle la distance des lames (140A-B) par rapport à la surface interne du tube (102, 202) est réglable.

6. Machine de bouletage (100) selon une quelconque revendication précédente, dans laquelle le racleur (138, 438) est conçu pour se déplacer en alternance dans une direction parallèle à l'axe longitudinal du tube rotatif (102, 202).

7. Machine de bouletage (100) selon une quelconque revendication précédente, dans laquelle le racleur (138, 438) est conçu pour permettre aux arêtes circonférentielles (150A-B) de s'accumuler à une hauteur maximale sensiblement égale à leur largeur.

8. Machine de bouletage (100) selon une quelconque revendication précédente, dans laquelle le racleur (138) est agencé de sorte que les côtés latéraux des évidements s'effilent vers l'intérieur.

9. Machine de bouletage selon l'une quelconque des revendications 1 à 7, dans laquelle le racleur (438) est agencé de sorte que les côtés latéraux des évidements soient inclinés dans la même direction.

10. Machine de bouletage (100) selon une quelconque revendication précédente, dans laquelle la surface intérieure du tube rotatif (102) est lisse, tel qu'entre une première extrémité du tube rotatif (102) et une seconde extrémité du tube rotatif (102).

11. Machine de bouletage selon l'une quelconque des revendications 1 à 9, dans laquelle la surface interne du tube rotatif (202) comprend une ou plusieurs saillies circonférentielles (254) dans des positions qui correspondent aux positions des seconds évidements de sorte que les arêtes circonférentielles (250B) correspondantes puissent s'accumuler sur les saillies (254).

12. Machine de bouletage (100) selon une quelconque revendication précédente, dans laquelle le racleur (138, 438) est agencé de sorte que : les premières arêtes circonférentielles (150A) présentent une hauteur maximale de 60 mm à 100 mm, les secondes arêtes circonférentielles (150B) présentent une hauteur maximale de 150 mm à 250 mm, et/ou les arêtes circonférentielles (150A-B) présentent une séparation de 180 mm à 250 mm entre chaque arête.

13. Méthode de bouletage de matériau à l'aide de la machine de bouletage (100) selon une quelconque revendication précédente, la méthode comprenant les étapes de :
fourniture d'un matériau dans le tube rotatif (102, 202) et rotation du tube rotatif (102, 202) de manière à former des billes ;
dans laquelle une partie du matériau s'accumule sur la surface interne du tube rotatif (102, 202) et est raclée par le racleur (138, 438) ;
dans laquelle le racleur (138, 438) régule l'accumulation de sorte que le matériau forme une pluralité d'arêtes circonférentielles (150A-B) sur la surface interne du tube rotatif (102, 202) ; et
dans laquelle au moins deux des arêtes circonférentielles (150A-B) présentent des hauteurs maximales différentes.

14. Méthode selon la revendication 13, dans laquelle le matériau présente une teneur en fer comprise entre 40 % et 70 %,

15. Racleur (138, 438) pour réguler l'accumulation de matériau sur la surface intérieure d'un tube rotatif (102, 202) d'une machine de bouletage (100), le racleur comprenant :
un bord de raclage comprenant une pluralité de dents (146, 346) et une pluralité d'évidements (148A-B) entre les dents (146, 346), dans lequel, lors de l'utilisation, l'agencement des dents (146, 346) et des évidements (148A-B) permet au matériau de s'accumuler en une pluralité d'arêtes circonférentielles (150A-B) sur la surface intérieure du tube rotatif (102, 202) ;
**caractérisé en ce qu'**un premier et un second des évidements (148A-B) présentent des profondeurs différentes pour permettre à au moins deux des arêtes circonférentielles (150A-B) de **s'accumuler** à des hauteurs maximales différentes.
